# NEUE EUROPÄISCHE PATENTSCHRIFT

(11) **EP 0 746 073 B2**
(45) Veröffentlichungstag und Bekanntmachung des Hinweises auf die Entscheidung über den Einspruch: **16.10.2002**
(45) Hinweis auf die Patenterteilung: 05.08.1998
(21) Anmeldenummer: 96108533.9
(22) Anmeldetag: 29.05.1996
(51) Int. Cl.: H02G 1/04, G02B 6/44

(54) **Verfahren zur Installation eines Lichtwellenleiter-Kabels an einer Hochspannungsfreileitung**
Process for installing an optical wave guide cable on a high voltage overhead line
Procédé d'installation d'un câble à guides ondes optiques sur une ligne aérienne à haute tension

(30) Priorität: 30.05.1995 DE 19519773
(43) Veröffentlichungstag der Anmeldung: 04.12.1996
(73) Patentinhaber: SIEMENS AKTIENGESELLSCHAFT, 80333 München (DE)
(72) Erfinder: Kunze, Dieter, Dipl.-Ing., 82061 Neuried (DE); Mayr, Ernst, Dipl.-Ing., 82319 Starnberg (DE)
(74) Vertreter: Epping Hermann & Fischer

(56) Entgegenhaltungen:
- EP-A- 0 410 735
- DE-A- 3 228 239
- DE-A- 3 702 781
- GB-A- 2 279 820

## Beschreibung

Die Erfindung betrifft ein Verfahren zur Installation eines Lichtwellenleiter-Kabels an einer Hochspannungsfreileitung mit Hilfe von Befestigungsmitteln.

Bekannte Lösungen bestehen darin, daß Erdseile gegen sogenannte Erdseilluftkabel oder Phasenseile gegen Phasenseilkabel ausgewechselt werden.

Außerdem ist bekannt, volldielektrische Lichtwellenleiter-Kabel zwischen oder neben den Phasenseilen aufzuhängen. Der Vorteil der vollisolierten Kabel besteht darin, daß diese bei Einhaltung umfangreicher Sicherheitsvorkehrungen auch ohne Abschaltung der EVU-Versorgung installiert werden können. Als Nachteil ist jedoch anzusehen, daß ein zusätzliches Kabel für die Masten eine Zusatzlast darstellt, für die die Masten eventuell nicht dimensioniert sind; denn es ist sowohl möglicher Eisbefall wie auch zusätzliche Windlast durch das neue Kabel mit einzuberechnen.

Weiterhin ist auch das Anlaschen oder Anschellen eines Lichtwellenleiter-Kabels an Phasen- oder Erdseilen bekannt. Auch können dünne Lichtwellenleiter-Kabel direkt an ein EVU-Seil aufgewendelt werden, wie zum Beispiel aus der deutschen Offenlegungsschrift 32 28 239 hervorgeht.

Es muß jedoch zur Installation nach einem dieser genannten Verfahren die EVU-Linie doch abgeschaltet werden, und zwar auch im Falle der Nutzung eines Erdseiles; denn das Erdseil ist immer über dem Phasenseil angeordnet. Beim Anwendeln von Lichtwellenleiter-Kabeln ist zusätzlich von Nachteil, daß nur relativ dünne Lichtwellenleiter-Kabel verwendet werden können, da jeweils die gesamte Kabellänge von der Anlaschmaschine rotierend mitgeführt werden muß.

Aufgabe der vorliegenden Erfindung ist nun, ein Verfahren zu finden, mit dem ein Lichtwellenleiter-Kabel in Trassen der Energieversorgungsunternehmen nachträglich einzubringen ist, wobei die EVU-Strecke nicht abgeschaltet werden muß. Außerdem muß das Lichtwellenleiter-Kabel so angebracht werden können, daß gegenüber einem freihängenden Kabel kaum eine mechanische Mehrbelastung auftritt.

Die gestellte Aufgabe wird mit einem Verfahren der eingangs erläuterten Art dadurch gelöst, daß das Lichtwellenleiter-Kabel von einer auf dem Boden gelagerten Kabeltrommel über Umlenkrollen an einem ersten Mast hochgeführt und mit einer auf dem Erdseil der Hochspannungsfreileitung fahrbar aufgebrachten Kabelzugmaschine gekuppelt wird, daß das Lichtwellenleiter-Kabel mit Hilfe der Kabelzugmaschine entlang des Erdseils bis jeweils zum nächsten Mast aufgezogen wird, daß dort die Kabelzugmaschine ins jeweils nächste Spannfeld umgesetzt wird und daß nach dem Aufzug der gesamten Länge des Lichtwellenleiter-Kabels eine Anlaschmaschine vom Endpunkt der Verlegestrecke zum Anfangspunkt geführt wird, wobei die Anlaschmaschine die Befestigungsmittel absetzt und das Lichtwellenleiter-Kabel mit dem Erdseil verbindet.

Die gestellte Aufgabe wird weiterhin durch ein Verfahren der eingangs erläuterten Art dadurch gelöst, daß ein Rohr mit Hilfe einer Kabelzugmaschine und einer Anlaschmaschine am Erdseil installiert wird und daß das Lichtwellenleiter-Kabel, Lichtwellenleiter-Fasern oder Lichtwellenleiter-Bändchen in das Rohr eingebracht werden.

Ein Vorteil bei dem Verfahren gemäß der Erfindung ist in erster Linie darin zu sehen, daß das benötigte Lichtwellenleiter-Kabel bei nicht abgeschalteter EVU-Strecke am Erdseil installiert werden kann. Damit wird die Mastlinie bzw. das jeweilige Spannfeld gegenüber einem freihängenden voll dielektrischen Kabel nur wenig mehr belastet. Außerdem ist keine zulässige Eislast im Winter zu erwarten. Zusätzliche Masthängepunkte werden für das Lichtwellenleiter-Kabel nicht benötigt und das Lichtwellenleiter-Kabel selbst muß nur geringe Zugfestigkeit besitzen, da es am Erdseil angelascht ist. Durch das Verfahren zum Installieren eines Lichtwellenleiter-Kabels gemäß der Erfindung ist auch ein Vorteil darin zu sehen, daß das Lichtwellenleiter-Kabel von der Kabelzugmaschine nicht in seiner vollen Länge aufgenommen werden muß, wie es bei bisherigen Verfahren der Fall ist. Bei dem neuen Verfahren wird das Lichtwellenleiter-Kabel vom Fuße eines Endmastes aus auf die Anlage hochgezogen. Das Lichtwellenleiter-Kabel wird am Mast entlang hochgeführt, über eine Umlenkrolle gelegt und an einer am Erdseil eingehängten Kabelzugmaschine angekoppelt. Die Kabelzugmaschine wird dann gestartet und zieht das Lichtwellenleiter-Kabel bis zum nächsten Mast. Die Kabelzugmaschine kann vom Boden aus gezogen werden oder mit einer eigenen Energiequelle, z.B. Druckgasflasche, Batterie oder Verbrennungsmotor, ausgestattet sein und ferngesteuert werden. Zweckmäßig ist aber auch eine elektrische Versorgung über ein Energie- und Steuerkabel, ein sogenanntes Hilfskabel, das mit der Kabelzugmaschine mitgeführt wird. So kann sich die Energiequelle und die Steuereinrichtung entweder am Fuße des Mastes befinden oder auch am Boden entlang in der Position der Kabelzugmaschine mitgeführt werden. Im letzteren Fall ist das Hilfskabel voll isoliert und eventuell zusätzlich mit Isoliertellern, zum Beispiel aufgeschrumpften Tellern, ausgestattet, so daß eine nicht auszuschließende Berührung mit einem Phasenseil keine Gefährdung für das Legepersonal darstellt. Besonders vorteilhaft ist jedoch eine Variante des Legeverfahrens, bei der zwischen den Boden aus keinerlei Handhabung nötig ist. Bei dieser Art kann dann auf eine Vielzahl von Sicherheitsvorkehrungen verzichtet werden. Außerdem entfallen die Probleme bei Kreuzungen über Flüsse, Straßen, bewaldeten oder bebauten Grundstücken.

Die Erfindung wird nun anhand von fünf Figuren näher erläutert.
- Figur 1: verdeutlicht den Aufziehvorgang des Lichtwellenleiter-Kabels entlang eines Spannfeldes.
- Figur 2: zeigt den Anlaschvorgang.
- Figur 3: zeigt eine Variante des Aufziehvorgangs.
- Figur 4: zeigt ein Befestigungsmittel zum Anlaschen des Lichtwellenleiter-Kabels.
- Figur 5: zeigt ein Lichtwellenleiter-Kabel bzw. ein Rohr mit angeformtem Befestigungsmittel.

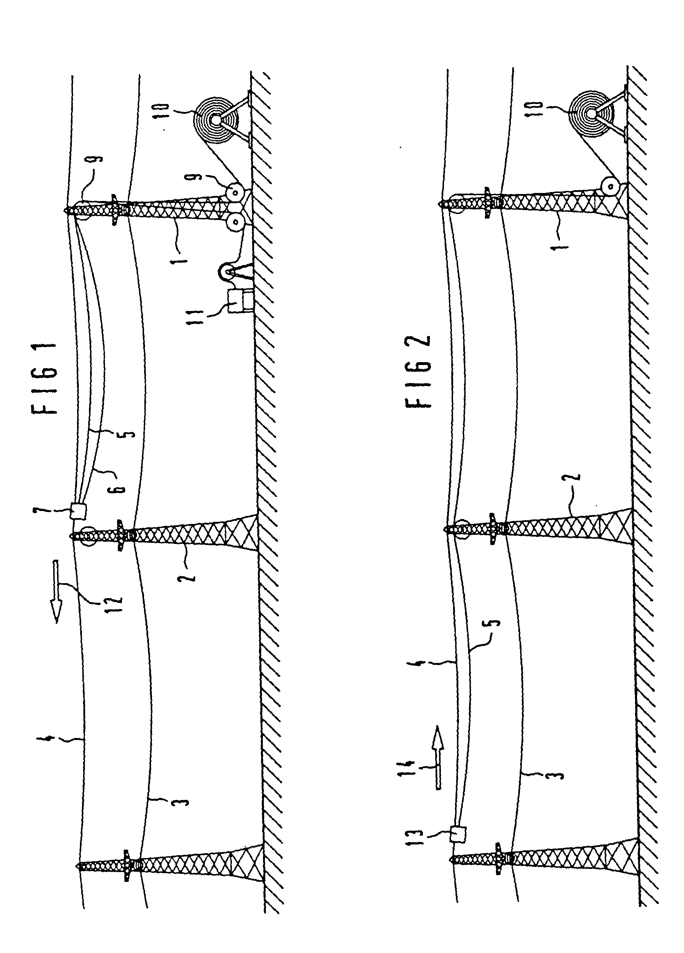

Figur 1 zeigt in schematischer Darstellung die Anordnung einer EVU-Strecke mit Phasenseilen 3 und einem Erdseil 4. Die Kabeltrommel 10 mit dem zu verlegenden Lichtwellenleiter-Kabel 5 sowie der Vorrat eines Hilfskabels 6 für die Versorgung und Steuerung der Kabelzugmaschine 7 befinden sich am Fuße eines ersten Mastes 1. Beide Kabel sind im Mast 1 hochgeführt und werden in Höhe des Erdseiles 4 über Umlenkrollen 9 umgelenkt. Die Figur 1 zeigt die Situation kurz vor dem Ende der Verlegung innerhalb des ersten Spannfeldes. Am Mast 2 ist dann das Lichtwellenleiter-Kabel vorübergehend zu verankern, da die Kabelzugmaschine 7 in das nächste Spannfeld umgesetzt werden muß, um das Lichtwellenleiter-Kabel weiter aufziehen zu können. In diesem Fall wird die Kabelzugmaschine vom Aggregat 11 aus über das Hilfskabel 6 gespeist und mit entsprechenden Signalen gesteuert. Wenn das Hilfskabel 6 in der Länge über mehrere Spannfelder hinweg nicht ausreicht, kann das Hilfskabel zurückgezogen werden und am entsprechend nächsten Mast in gleicher Weise wieder hochgezogen und an die Kabelzugmaschine 7 angekoppelt werden. Durch den Pfeil 12 ist die Verlegerichtung angedeutet.

Figur 2 verdeutlicht den Anlaschvorgang, wobei hier vom fernen Ende eines EVU-Streckenabschnittes mit dem Anlaschen des Lichtwellenleiter-Kabels 5 am Erdseil 4 begonnen wird. Der Pfeil 14 verdeutlicht die Anlaschrichtung, die entgegengesetzt zur vorher beschriebenen Verlegerichtung 12 verläuft. Bei diesem Anlaschvorgang ist die Kabelzugmaschine gegen eine Anlaschmaschine 13 ausgetauscht, es sei denn, daß eine Universalmaschine verwendet wird, bei der die Kabelzugmaschine mit der Anschellmaschine kombiniert sind. Bei diesem Vorgang fährt somit die Anlasch-oder Anschellmaschine zurück und befestigt das Lichtwellenleiter-Kabel 5. Die durch die langsam schwindenden zusätzlichen Durchhänge entstehende Überlänge wird durch Zurückziehen des Lichtwelenleiter-Kabels 5 zur Trommel 10 hin abgebaut bzw.. gestreckt. Bei diesem Anlaschvorgang können kontinuierliche oder auch diskontinuierliche Befestigungselemente verwendet werden.

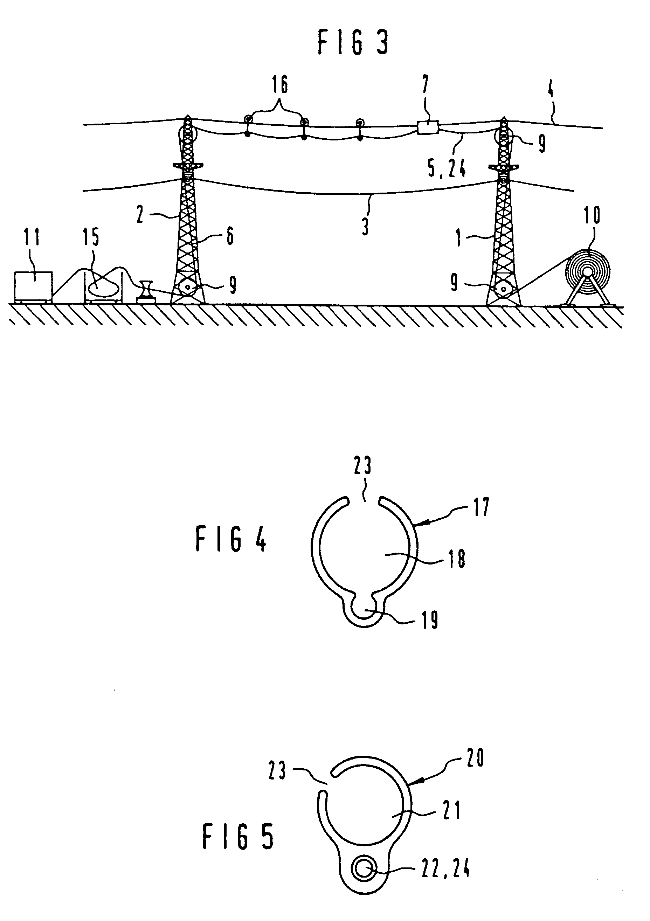

Figur 3 zeigt eine Variante des erfindungsgemäßen Verfahrens, die insbesondere bei großen Spannfeldlängen verwendet wird. Dabei wird die Kabelzugmaschine 7 vom jeweils nächsten Mast 2 aus gestartet, wobei auf diese Weise die Zugkraft klein gehalten werden kann. In entsprechenden Abständen werden Laufrollen 16 am Erdseil 4 zusammen mit dem Hilfskabel 6 eingehängt, so daß dieses rollend entlang des Erdseils 4 geführt wird. Somit wird für das Hilfskabel ebenfalls eine relativ geringe Zugfestigkeit benötigt. Nachdem die Kabelzugmaschine 7 am ersten Mast 1 angekommen ist, wird das Lichtwellenleiter-Kabel 5 angekoppelt. Die Kabelzugmaschine 7 fährt daraufhin zum Mast 2 zurück, wobei die Steuerung der Kabelzugmaschine 7 je nach Ausrüstung erfolgt. Im gezeigten Beispiel erfolgt die Versorgung der Kabelzugmaschine 7 wiederum von einem Aggregat 11 aus, wobei ein entsprechendes Kabelreservoir 15 abgelegt ist und über einen Kabel- oder Seilspill über Umlenkrollen 9 abgezogen wird. Diese Anordnungen entfallen natürlich, wenn eine batteriegetriebene Kabelzugmaschine 7 verwendet wird. Im nächsten Spannfeld wird entsprechend verfahren, wobei im Sinne eines möglichst kontinuierlichen Legen ein zweites Hilfskabel für den Antrieb günstig ist. Für den späteren Anlasch-oder Anschellvorgang gilt das bereits unter Figur 2 beschriebene Verfahren.

Ein Befestigungsmittel 17 ist in Figur 4 dargestellt. Es besteht aus einem geschlitzten Ring, dessen Schlitz 23 zum Einhängen des Lichtwellenleiter-Kabels und des Erdseils auseinandergefedert werden kann. Für das Lichtwellenleiter-Kabel ist dabei eine Rastaussparung 19 vorgesehen, in die das Lichtwellenleiter-Kabel eingeschnappt werden kann. Der weitere ringförmige Teil 18 dient zur Aufnahme des Erdseils 4 und ist im Durchmesser so gestaltet, daß ein Entlanggleiten am eingeführten Erdseil möglich ist.

Figur 5 zeigt ein Ausführungsbeispiel eines Lichtwellenleiter-Kabels 22, dessen Kabelmantel bereits mit einem Befestigungselement 20 versehen ist. Dieses Befestigungselement 20 ist wiederum so gestaltet, daß es einen geschlitzten Aufnahmeraum 21 enthält, wobei über den Schlitz 23 reißverschlußartig das Erdseil eingeknöpft wird. Auch hier ist der Innendurchmesser des Befestigungselementes 20 so gewählt, daß ein Entlanggleiten am Erdseil möglich ist, so daß auch in diesem Fall das Aufziehen und Anlaschen des Lichtwellenleiter-Kabels in einem Arbeitsgang erfolgen kann. Zur Umgehung eines Mastes könnte dort ein Gleitfuß die Befestigungselemente kurz vor dem zweiten Mast abheben, so daß dieselben nach dem Passieren des Hängepunktes wieder angeknüpft werden können.

Ein weiteres Verfahren im Sinne der Erfindung ist dadurch gegeben, daß mit Hilfe einer Kabelzugmaschine und einer Anlaschmaschine am Erdseil ein Rohr installiert wird, das in der gleichen Weise wie das vorhergehende Installieren eines Lichtwellenleiter-Kabels am Erdseil vonstatten geht. In dieses Rohr können nun Lichtwellenleiter-Kabel, Uchtwellenleiter-Fasern oder Lichtwellenleiter-Bändchen eingebracht werden. Ein solches Rohr wird abschnittsweise von Mast zu Mast installiert und Verbindungsstellen werden entsprechend gemufft. Ein solches Rohr kann beispielsweise aus High-Density-Polyethylen (HDPE) bestehen und besitzt beispielsweise einen Außendurchmesser von 5 mm bei einer lichten Weite von 3 mm. Das Einbringen des Lichtwellenleiter-Kabels, der Lichtwellenleiter-Fasern oder Lichtwellenleiter-Bändchen kann beispielsweise durch Einblasen mit Druckluft in das Rohr geschehen. Für das Anlaschen eines derartigen Rohres können beispielsweise Befestigungsmittel 17 nach Figur 4 verwendet werden. Desgleichen wäre auch ein anlaschbares Rohr nach Figur 5 einsetzbar. Dieses besteht dann beispielsweise auch nur aus dem Extrudat 17, wobei anstelle des Kabels 22 das integrierte Rohr 24 verläuft.

Für die vorgenannten Verfahren eignen sich im großen und ganzen alle Kabeltypen; doch eignen sich am besten Zentralrohr-Kabel. Bei diesen Kabeln bestehen die Hüllen beispielsweise aus Polypropylen, High-Density-Polyethylen (HDPE) oder Epoxydharzen. Als Verstärkungselemente sind in diesen Hüllen Glasfaserverstärkungselemente, Drähte oder in Kunststoff eingebettete Glas-Rovings eingebracht, um die Zugfestigkeit zu erhöhen. Die Außenduchmesser dieser Lichtwellenleiter-Kabel betragen im allgemeinen zwischen 6 und 7 mm. Der Aufbau spielt für das erfindungsgemäße Verfahren zum Installieren dieser Lichtwellenleiter-Kabel im großen und ganzen keine Rolle, so daß hierauf nicht näher eingegangen werden muß. Als Zugseil für die Kabelzugmaschine kann beispielsweise ein Kevlar-Seil verwendet werden, das bitumengetränkt und mit einem entsprechenden Kunststoffmantel umgeben ist, wobei der Durchmesser vorzugsweise etwa 4 mm beträgt.

## Patentansprüche

1. Verfahren zur Installation eines Lichtwellenleiter-Kabels (5) an einer Hochspannungsfreileitung mit Hilfe von Befestigungsmitteln,
**dadurch gekennzeichnet,**
**daß** das Lichtwellenleiter-Kabel (5) von einer auf dem Boden gelagerten Kabeltrommel (10) über Umlenkrollen (9) an einem ersten Mast (1) hochgeführt und mit einer auf dem Erdseil (4) der Hochspannungsfreileitung fahrbar aufgebrachten Kabelzugmaschine (7) gekoppelt wird, daß das Lichtwellenleiter-Kabel (5) mit Hilfe der Kabelzugmaschine (7) entlang des Erdseils (4) bis jeweils zum nächsten Mast (2) aufgezogen wird, daß dort die Kabelzugmaschine (7) ins jeweils nächste Spannfeld umgesetzt wird und daß nach dem Aufzug der gesamten Länge des Lichtwellenleiter-Kabels (5) eine Anlaschmaschine (13) vom Endpunkt der Verlegestrecke zum Anfangspunkt geführt wird, wobei die Anlaschmaschine (13) die Befestigungsmittel absetzt und das Lichtwellenleiter-Kabel (5) mit dem Erdseil (4) verbindet.

2. Verfahren zum Installieren eines Lichtwellenleiter-Kabels (5) an einer Hochspannungsfreileitung mit Hilfe von Befestigungsmitteln,
**dadurch gekennzeichnet,**
**daß** ein Rohr (24) mit Hilfe einer Kabelzugmaschine (7) und einer Anlaschmaschine (13) am Erdseil (4) installiert wird und daß das Lichtwellenleiter-Kabel (5), Lichtwellenleiter-Fasern oder Lichtwellenleiter-Bändchen in das Rohr (24) eingebracht werden.

3. Verfahren nach einem der vorhergehenden Ansprüche,
**dadurch gekennzeichnet,**
**daß** als Befestigungsmittel Hängeösen (17) verwendet werden.

4. Verfahren nach einem der Ansprüche 1 oder 2,
**dadurch gekennzeichnet,**
**daß** das Lichtwellenleiter-Kabel (5) oder das Rohr (24) mit einem längsverlaufenden Befestigungsmittel (17, 20) versehen ist, in dem eine integrierte Nut (18, 21) zur Aufnahme des Erdseils (4) versehen ist.

5. Verfahren nach Anspruch 2,
**dadurch gekennzeichnet,**
**daß** in das Rohr (24) die Lichtwellenleiter-Fasern oder Lichtwellenleiter-Bändchen durch Einblasen in das Rohr eingebracht werden.

6. Verfahren nach einem der vorhergehenden Ansprüche,
**dadurch gekennzeichnet,**
**daß** die Kabelzugmaschine (7) vom ersten Mast (1) aus gestartet wird, wobei das Hilfskabel (6) am ersten Mast (1) hochgezogen ist.

7. Verfahren nach einem der Ansprüche 1 bis 5,
**dadurch gekennzeichnet,**
**daß** die Kabelzugmaschine (7) vom fernen Mast (2) aus zum ersten Mast (1) gestartet wird und dort mit dem Lichtwellenleiter-Kabel (5) gekoppelt wird, wobei das Hilfskabel (6) am fernen Mast (2) hochgezogen ist und von der Kabelzugmaschine (7) entlang des Erdseils gezogen wird.

8. Verfahren nach Anspruch 7,
**dadurch gekennzeichnet,**
**daß** das Hilfsseil (6) über eingehängte Laufrollen (16) entlang des Erdseils (4) geführt wird.

9. Verfahren nach einem der vorhergehenden Ansprüche,
**dadurch gekennzeichnet,**
**daß** die Kabelzugmaschine oder Anschellmaschine mit fernsteuerbaren Antrieben und mitgeführten Energieaggregaten versehen werden.

## Claims

1. Method for the installation of a fibre-optic cable (5) on a high-voltage overhead line with the aid of securing means, **characterized in that** the fibre-optic cable (5) is pulled up, over deflecting rollers (9) on a first pylon (1), from a cable drum (10) mounted on the ground and is coupled to a cable pulling machine (7) which is fitted on the earth wire (4) of the high-voltage overhead line such that it can be moved, **in that** the fibre-optic cable (5) is pulled up along the earth wire (4) to the respective next pylon (2) with the aid of the cable pulling machine (7), **in that**, there the cable pulling machine (7) is transferred into the respective next span and **in that**, after pulling up the entire length of the fibre-optic cable (5), a strapping machine (13) is guided from the end point of the laid section to the starting point, the strapping machine (13) depositing the securing means and connecting the fibre-optic cable (5) to the earth wire (4).

2. Method of installing a fibre-optic cable (5) on a high-voltage overhead line with the aid of securing means, **characterized in that** a tube (24) is installed on the earth wire (4) with the aid of a cable pulling machine (7) and a strapping machine (13), and **in that** the fibre-optic cable (5), optical fibres or optical fibre ribbons are inserted into the tube (24).

3. Method according to one of the preceding claims, **characterized in that** suspension eyes (17) are used as securing means.

4. Method according to one of Claims 1 or 2, **characterized in that** the fibre-optic cable (5) or the tube (24) is provided with a securing means (17, 20) which extends longitudinally and in which an integrated groove (18, 21) is provided for the accommodation of the earth wire (4).

5. Method according to Claim 2, **characterized in that** the optical fibres or optical fibre ribbons are inserted into the tube (24) by blowing into the tube.

6. Method according to one of the preceding claims, **characterized in that** the cable pulling machine (7) is started from the first pylon (1), the auxiliary cable (6) being pulled up on the first pylon (1).

7. Method according to one of Claims 1 to 5, **characterized in that** the cable pulling machine (7) is started from the remote pylon (24) towards the first pylon (1) and is coupled to the fibre-optic cable (5) there, the auxiliary cable (6) being pulled up on the remote pylon (2) and pulled along the earth wire by the cable pulling machine (7).

8. Method according to Claim 7, **characterized in that** the auxiliary wire (6) is guided along the earth wire (4) over running rollers (16) which are hung on.

9. Method according to one of the preceding claims, **characterized in that** the cable pulling machine or clamping machine are provided with remotely controllable drives and with power units which are taken along with them.

## Revendications

1. Procédé pour l'installation d'un câble à guides d'ondes optiques (5) sur une ligne aérienne à haute tension, à l'aide de moyens de fixation,
**caractérisé par le fait**
**que** le câble à guides d'ondes optiques (5) est guidé, à partir d'un touret de câble (10) placé sur un dérouleur au niveau du sol, par l'intermédiaire de poulies de renvoi (9), vers le haut d'un premier pylône (1) et est accroché à un tracteur de câble (7) placé d'une façon mobile sur le filin de garde (4) de la ligne aérienne à haute tension, que le câble à guides d'ondes optiques (5) est tiré, à l'aide du tracteur de câble (7), le long du filin de garde (4) respectivement jusqu'au pylône suivant (2), que, à ce niveau, le tracteur de câble (7) est transféré respectivement sur la travée suivante et que, une fois que toute la longueur de câble à guides d'ondes optiques (5) a été tirée, une machine à agrafer (13) est guidée du point final de la section de pose vers son point de départ, la machine à agrafer (13) plaçant les moyens de fixation et attachant le câble à guides d'ondes optiques (5) au filin de garde (4).

2. Procédé pour l'installation d'un câble à guides d'ondes optiques (5) sur une ligne aérienne à haute tension, à l'aide de moyens de fixation,
**caractérisé par le fait**
**qu'**un tube (24) est monté sur le filin de garde (4) à l'aide d'un tracteur de câble (7) et d'une machine à agrafer (13) et que le câble à guides d'ondes optiques (5), des fibres optiques ou des rubans de guides d'ondes optiques sont placés dans le tube (24).

3. Procédé selon une des revendications précédentes
**caractérisé par le fait**
**que** des anneaux de suspension (17) sont utilisés comme moyens de fixation.

4. Procédé selon une des revendications 1 ou 2
**caractérisé par le fait**
**que** le câble à guides d'ondes optiques (5) ou le tube (24) comporte un moyen allongé de fixation (17, 20) dans lequel une gorge intégrée (18, 21) est prévue pour y accueillir le filin de garde (4).

5. Procédé selon la revendication 2
**caractérisé par le fait**
**que** les fibres optiques ou les rubans de guides d'ondes optiques sont introduits dans le tube (24) par insufflation dans le tube.

6. Procédé selon une des revendications précédentes
**caractérisé par le fait**
**que** le tracteur de câble (7) est mis en marche à partir du premier pylône (1), le câble auxiliaire (6) étant tiré vers le haut du premier pylône (1).

7. Procédé selon une des revendications 1 à 5
**caractérisé par le fait**
**que** le tracteur de câble (7) est mis en marche à partir du pylône éloigné (2) vers le premier pylône (1) et y est couplé avec le câble à guides d'ondes optiques (5), le câble auxiliaire (6) étant tiré vers le haut sur le câble éloigné (2) et tiré par le tracteur de câble (7) le long du filin de garde.

8. Procédé selon la revendication 7
**caractérisé par le fait**
**que** le filin auxiliaire (6) est guidé par des poulies de roulement (16) le long du filin de garde (4).

9. Procédé selon une des revendications précédentes
**caractérisé par le fait**
**que** le tracteur de câble ou la machine à agrafer sont équipés d'entraînements télécommandables et de groupes énergétiques embarqués.
